# EUROPEAN PATENT APPLICATION

(11) **EP 4 675 722 A1**
(43) Date of publication of application: **07.01.2026**
(21) Application number: 24763487.6
(22) Date of filing: 01.02.2024
(51) Int. Cl.: H01M 10/04, H01M 4/02, H01M 4/13, H01M 6/10, H01M 6/16, H01M 10/052, H01M 10/0587, H01M 50/531

(54) **CYLINDRICAL BATTERY**

(30) Priority: 27.02.2023 JP 2023028230
(71) Applicant: Panasonic Energy Co., Ltd., Osaka 570-8511 (JP)
(72) Inventor: IMAOKU, Takao, Kadoma-shi, Osaka 571-0057 (JP); WAKABAYASHI, Hiromichi, Kadoma-shi, Osaka 571-0057 (JP); FUKUI, Kosuke, Kadoma-shi, Osaka 571-0057 (JP); ITO, Katsuya, Kadoma-shi, Osaka 571-0057 (JP)
(74) Representative: Eisenführ Speiser
(86) International application number: PCT/JP2024/003242
(87) International publication number: WO 2024/181003

(57) **Abstract**

A negative electrode mixture layer (12b) has an extension section (38) that extends to the winding starting side from the winding inside of a starting end (40) on the winding starting side of a positive electrode (11). A first distance (d1) between the center (40a) of the starting end (40) in the width direction and a mixture layer starting end (50) on the winding starting side of the negative electrode mixture layer (12b) is greater than at least one of a second distance (d2) between one end (40b) of the starting end (40) in the width direction and the mixture layer starting end (50), and a third distance (d3) between the other end (40c) of the starting end (40) in the width direction and the mixture layer starting end (50).

## Description

### TECHNICAL FIELD

The present disclosure relates to a cylindrical battery.

### BACKGROUND ART

Conventionally, there is a cylindrical battery described in Patent Literature 1. The cylindrical battery comprises an electrode assembly that includes a positive electrode and a negative electrode that are wound with a separator intervening therebetween. In the cylindrical battery, the end portions of the positive electrode and the negative electrode on the winding start side form an asymmetrical shape, thereby preventing the end portions of the positive electrode and the negative electrode on the winding start side from sticking out through the separator.

### CITATION LIST

### PATENT LITERATURE

PATENT LITERATURE 1: Japanese Unexamined Patent Application Publication No. 2001-160411

### SUMMARY

The inventors of the present application have found that when charging and discharging are repeated, a portion around the width-direction center of the positive electrode start end presses the separator, and possibly reduces the voltage. The present disclosure has an advantage to provide a cylindrical battery that can prevent voltage reduction due to charging and discharging.

To solve the above problem, a cylindrical battery according to the present disclosure comprises: an electrode assembly that includes: an elongated positive electrode that includes a positive electrode core and a positive electrode mixture layer; and an elongated negative electrode that includes a negative electrode core and a negative electrode mixture layer, the electrodes being wound with a separator intervening therebetween; a bottomed cylindrical exterior can that accommodates the electrode assembly; and a sealing assembly that blocks an opening portion of the exterior can, wherein the negative electrode mixture layer includes an extending portion that extends from a winding inner side of a start end of the positive electrode on a winding start side to the winding start side, and a first distance between a width-direction center at the start end and a mixture layer start end of the negative electrode mixture layer on the winding start side is longer than at least one of a second distance between a width-direction one end at the start end and the mixture layer start end, and a third distance between a width-direction another end at the start end and the mixture layer start end.

According to the cylindrical battery according to the present disclosure, the voltage reduction due to charging and discharging can be prevented.

### BRIEF DESCRIPTION OF DRAWING

FIG. 1 is a sectional view of a cylindrical battery in the axial direction according to one embodiment of the present disclosure.
In FIG. 2, (a) is a schematic plan view of a winding-start-side end portion on a winding inner surface with a positive electrode being longitudinally developed, and (b) is a schematic plan view of the winding-start-side end portion on a winding outer surface with a negative electrode being longitudinally developed.
FIG. 3 is a schematic plan view of a winding-start-side end portion of a positive electrode on a winding inner surface of a longitudinally developed positive electrode in a comparative example.
FIG. 4 is a schematic plan view of a positive electrode in a first modified example corresponding to FIG. 2(a).
FIG. 5 is a schematic plan view of a positive electrode in a second modified example corresponding to FIG. 2(a).

### DESCRIPTION OF EMBODIMENTS

Referring to the drawings, an embodiment of a cylindrical battery according to the present disclosure is described below in detail. Note that the cylindrical battery in the present disclosure may be a primary battery or a secondary battery. It may be a battery that uses aqueous electrolyte, or a battery that uses non-aqueous electrolyte. In the following, a non-aqueous electrolyte secondary battery (lithium-ion battery) that uses non-aqueous electrolyte is described below as a cylindrical battery 10 that is an embodiment. However, the cylindrical battery in the present disclosure is not limited to this. The electrolyte may be aqueous electrolyte.

It is originally assumed that the characteristic portions of the embodiment and modified examples described below are combined as appropriate, and a new embodiment is constructed. In the following embodiment, the same configuration is assigned the same symbol in the diagram, and redundant description is omitted. The plurality of drawings include schematic diagrams. Among different diagrams, the ratios of longitudinal, lateral, and height dimensions and the like of the members do not necessarily match. In the present Description, the sense of the axial direction (height direction) of the cylindrical battery 10 where the sealing assembly 17 is present is defined as "upper", and the sense of the axial direction where the bottom portion 31 is present is defined as "lower". Among the configuration elements described below, configuration elements that are not described in an independent claim representing the highest-level concept are arbitrary configuration elements, and are not necessary configuration elements.

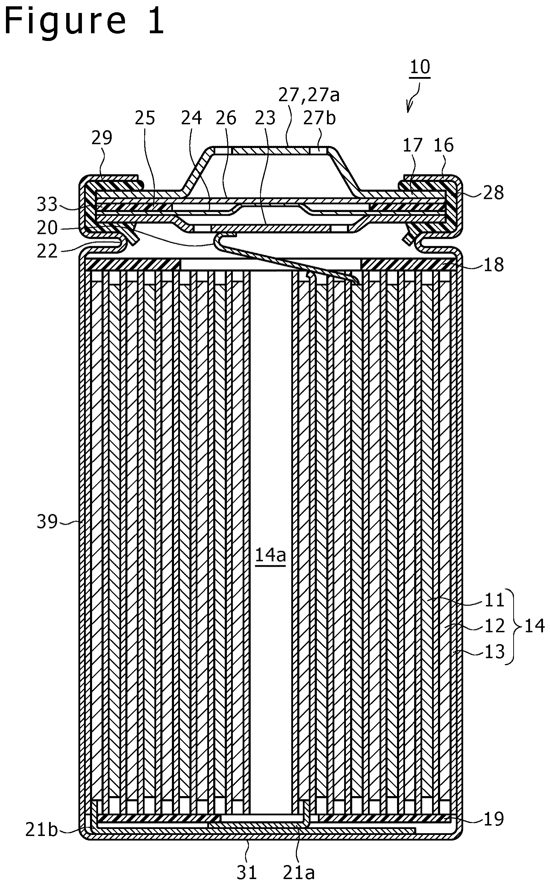

FIG. 1 is a sectional view of a cylindrical battery 10 in the axial direction according to one embodiment of the present disclosure. As shown in FIG. 1, the cylindrical battery 10 includes: an electrode assembly 14; a bottomed cylindrical exterior can 16 that accommodates the electrode assembly 14; and a sealing assembly 17 that blocks an opening portion of the exterior can 16. The exterior can 16 houses non-aqueous electrolyte along with the electrode assembly 14. The exterior can 16 includes, at its upper end portion, a shoulder portion 29 that is bent inward in the radial direction and extends inward. The exterior can 16 includes a grooved portion 22 formed in a side wall, and the sealing assembly 17 is supported by the grooved portion 22 and blocks an opening portion of the exterior can 16.

The cylindrical battery 10 further comprises a gasket 28 that intervenes between the exterior can 16 and the sealing assembly 17. The gasket 28 is a ring-shaped plastic member attached to an outer peripheral portion of the sealing assembly 17, and insulates the sealing assembly 17 from the exterior can 16. The gasket 28 blocks the gap between the exterior can 16 and the sealing assembly 17, and seals the inside of the battery. The gasket 28 is made of, for example, polyolefin.

The non-aqueous electrolyte contains a non-aqueous solvent, and electrolyte salt dissolved in the non-aqueous solvent. The non-aqueous solvent may be, for example, any of esters, ethers, nitriles, or amides, a mixed solvent of two or more of them, or the like. The non-aqueous solvent may contain a halogenated compound made by replacing at least some of hydrogen atoms of the solvent with halogen atoms, such as fluorine. Examples of the non-aqueous solvent include ethylene carbonate (EC), ethyl methyl carbonate (EMC), dimethyl carbonate (DMC), a mixed solvent of them and the like. The electrolyte salt may be, for example, lithium salt, such as LiPF₆. Note that the non-aqueous electrolyte is not limited to liquid electrolyte, and may be solid electrolyte instead.

An electrode assembly 14 includes a positive electrode 11, a negative electrode 12, and a separator 13, and has a wound structure where the positive electrode 11 and the negative electrode 12 are spirally wound with the separator 13 intervening therebetween. The positive electrode 11, the negative electrode 12, and the separator 13 are strip-shaped elongated bodies, and are spirally wound, thus being alternately stacked in the radial direction of the electrode assembly 14. The negative electrode 12 is formed to have a dimension one size larger than the positive electrode 11 in order to prevent lithium from depositing. That is, the negative electrode 12 is formed to be longer in the longitudinal direction and the width direction than the positive electrode 11. The separator 13 is formed to have a dimension at least one size larger than the positive electrode 11. For example, two separators 13 are disposed so as to sandwich the positive electrode 11.

A positive electrode lead 20, and two negative electrode leads 21a and 21 b are connected to the electrode assembly 14. The positive electrode lead 20 electrically connects the positive electrode 11 and the sealing assembly 17 to each other. The first negative electrode lead 21a is joined to the winding-start-side end portion of the negative electrode 12, and electrically connects the winding-start-side end portion and the bottom portion 31 of the exterior can 16 to each other. The second negative electrode lead 21b is joined to the winding-end-side end portion of the negative electrode 12, and electrically connects the winding-end-side end portion and the bottom portion 31 of the exterior can 16 to each other.

In the example shown in FIG. 1, the positive electrode lead 20 extends toward the sealing assembly 17 through an opening portion of an upper insulating plate 18, and is joined to the lower surface of the sealing assembly 17. The first negative electrode lead 21a is bent toward a hollow portion 14a of the electrode assembly 14 through a throughhole of a ring-shaped lower insulating plate 19. The second negative electrode lead 21b passes through the outside of the lower insulating plate 19, and is bent so as to overlap the first negative electrode lead 21a. The overlapping portion of the first negative electrode lead 21a and the second negative electrode lead 21b is resistance-welded using a welding rod inserted through the hollow portion 14a of the electrode assembly 14, and is joined to the inner surface of the bottom portion 31 of the exterior can 16.

When the negative electrode leads 21a and 21b are joined to the opposite ends of the negative electrode 12 in the longitudinal direction, the current collection path of the negative electrode 12 becomes short, which reduces the internal resistance of the cylindrical battery 10. Note that the negative electrode lead may be joined only to the winding-end-side end portion of the negative electrode in the longitudinal direction. Alternatively, the negative electrode lead may be joined only to the winding-start-side end portion of the negative electrode in the longitudinal direction, and the outermost turn core exposed portion of the negative electrode core that is positioned at at least part of the outermost turn of the electrode assembly may be in contact with the inner-peripheral surface of the exterior can 16.

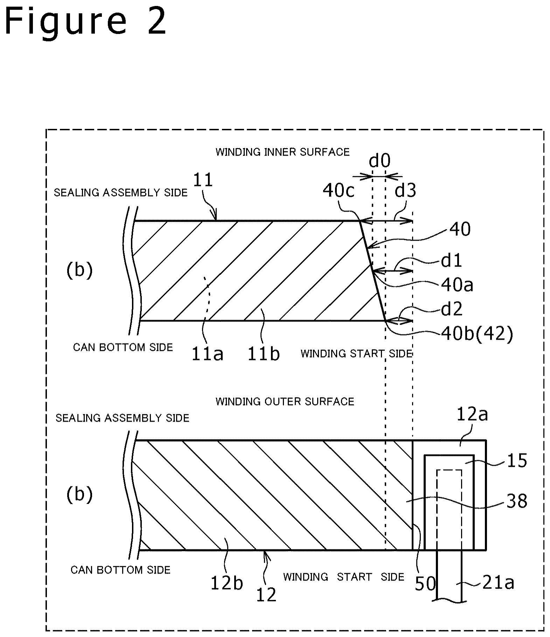

FIG. 2(a) is a schematic plan view of a winding-start-side end portion on the winding inner surface with the positive electrode 11 being longitudinally developed, and FIG. 2(b) is a schematic plan view of the winding-start-side end portion on the winding outer surface with the negative electrode 12 being longitudinally developed. Note that an area indicated by diagonal lines in FIG. 2(a) is a positive electrode mixture layer formation area, and an area indicated by diagonal lines in FIG. 2(b) is a negative electrode mixture layer formation area.

As shown in FIG. 2(a), the positive electrode 11 includes a positive electrode core 11a, and a positive electrode mixture layer 11b formed on at least one surface of the positive electrode core 11a. The positive electrode core 11a may be made of metal foil that is stable in the potential range of the positive electrode 11, such as of aluminum or an aluminum alloy, a film on which the metal is disposed as the surface layer, or the like. Preferably, the positive electrode mixture layer contains a positive-electrode active material, a conductive agent such as acetylene black, and a binding agent such as polyvinylidene fluoride (PVdF), and is formed on each of the opposite surfaces of the positive electrode core 11a. For example, a lithium transition metal composite oxide containing Ni, Co, Mn, Al or the like is used as the positive-electrode active material. The positive electrode lead 20 is connected to the positive electrode 11. Preferably, joining is made directly to the positive electrode core 11a by ultrasonic welding or the like. Preferably, the joined portion to the positive electrode core 11a is covered with insulating tape.

As shown in FIG. 2(b), the negative electrode 12 includes: a negative electrode core 12a; and a negative electrode mixture layer 12b formed on at least one surface of the negative electrode core 12a. The negative electrode core 12a may be made of metal foil that is stable in the potential range of the negative electrode 12, such as of copper or a copper alloy, a film on which the metal is disposed as the surface layer, or the like. Preferably, the negative electrode mixture layer 12b contains a negative-electrode active material, and a binding agent, such as styrene-butadiene rubber (SBR) or PVdF, and is formed on each of the opposite surfaces of the negative electrode core 12a. For example, graphite, a silicon-containing compound or the like is used as the negative-electrode active material. Preferably, the negative electrode leads 21a and 21b are directly joined to the negative electrode core 12a by ultrasonic welding or the like. Preferably, the joined portions to the negative electrode core 12a are covered with insulating tape 15.

Referring to FIG. 1, the exterior can 16 is typically made of metal, with iron as the principal component, for example, a material made by plating iron with nickel, but may be made of metal, with aluminum or the like as the principal component, instead. The exterior can 16 includes the cylindrical portion 39 and the bottom portion 31. The cylindrical portion 39 includes the ring-shaped grooved portion 22 and the ring-shaped shoulder portion 29. The grooved portion 22 is formed by depressing part of the cylindrical portion 39 inward in the radial direction by a spinning process. The shoulder portion 29 is formed when an upper end portion (an end portion on one side in the axial direction) of the cylindrical portion 39 is bent inward in the radial direction and swagged to a peripheral edge portion 33 of the sealing assembly 17, and extends inward in the radial direction at the upper end portion of the cylindrical portion 39.

The sealing assembly 17 is clamped by the shoulder portion 29 and the grooved portion 22 via the gasket 28 by swagging, thus being fixed to the exterior can 16. The grooved portion 22 is formed at a position apart from the upper end of the exterior can 16 by a predetermined length. The predetermined length is, for example, a length corresponding to what is greater than or equal to 1% and less than or equal to 20% of the length of the exterior can 16 in the axial direction.

The sealing assembly 17 has a structure that includes a terminal plate 23, a lower vent member 24, an insulating plate 25, an upper vent member 26, and a sealing plate 27 stacked in this order from the electrode assembly 14 side. The members constituting the sealing assembly 17 each have, for example, a disk shape or a ring shape. Each of the members except the insulating plate 25 are electrically connected to each other. The sealing plate 27 has a convex shape where a center portion in the radial direction protrudes outward. A projection 27a of the sealing plate 27 includes an inclined surface portion formed into a ring shape, and a flat top surface portion surrounded by the inclined surface portion. One or more vent holes 27b are formed in the top surface portion.

The lower vent member 24, the insulating plate 25, and the upper vent member 26 constitute a current blocking mechanism. The lower vent member 24 and the upper vent member 26 are connected to each other at their center portions, and the insulating plate 25 intervenes between their peripheral edge portions. Possible increase in the internal pressure due to occurrence of an abnormality in the cylindrical battery 10 causes the lower vent member 24 to be deformed to push up the upper vent member 26 toward the sealing plate 27 and to be broken, thereby breaking the current path between the lower vent member 24 and the upper vent member 26. Further increase in the internal pressure breaks the upper vent member 26, and gas is exhausted through the vent holes 27b of the sealing plate 27.

In the present embodiment, the positive electrode lead 20 is connected to the lower surface of the terminal plate 23 by welding, ultrasonic welding or the like, and the sealing plate 27 that is a top plate of the sealing assembly 17 and is electrically connected to the terminal plate 23 serves as a positive electrode terminal. The exterior can 16 to which the negative electrode leads 21a and 21b are joined serves as a negative electrode terminal.

Next, referring to FIG. 2, the structure of the positive electrode 11 and the arrangement position of the positive electrode 11 with respect to the negative electrode 12 are described in detail. As shown in FIG. 2(a) and FIG. 2(b), the negative electrode mixture layer 12b includes an extending portion 38 that extends from the winding inner side of a winding-start-side start end 40 of the positive electrode 11 toward the winding start side of the electrode assembly 14. For example, the extending portion 38 extends on the winding start side by a length greater than or equal to 1/5 turn and less than or equal to one turn.

As shown in FIG. 2(a), the start end 40 of the positive electrode 11 is displaced from the lower side (the bottom portion 31 side of the exterior can 16) in the axial direction toward the winding end side of the positive electrode 11 in the longitudinal direction as being shifted upward, and the start end 40 extends on a line inclined from the width direction of the positive electrode 11 at an acute angle. Preferably, the distance d0 in the longitudinal direction of the positive electrode 11 between the width-direction center 40a of the start end 40 and the distal end portion 42 positioned at a lower end 40b of the start end 40 is greater than or equal to 0.5 mm and less than or equal to 5 mm; the reason is described later. The distal end portion 42 at the start end 40 is a portion positioned closest to the winding start side at the start end 40. Preferably, this portion is provided at at least one of the lower end 40b and upper end 40c of the start end 40.

As shown in FIG. 2(b), a mixture layer start end 50 extends substantially in parallel with the width direction of the negative electrode 12. As shown in FIG. 2(a) and FIG. 2(b), a first distance d1 between the center 40a of the start end 40 and the mixture layer start end 50 is longer than a second distance d2 between a lower end (width-direction one end) 40b of the start end 40 in the width direction and the mixture layer start end 50. The first distance d1 may be longer than a third distance d3 between the width-direction upper end (other end of the width direction) 40c at the start end 40 and the mixture layer start end 50. The first distance d1 may be longer than both the second distance d2 and the third distance 33. As described above, the center 40a of the start end 40 is arranged to be more apart from the mixture layer start end 50 than at least one of the lower end 40b and the upper end 40c in the width direction, which can prevent the separator 13 from being pressed by the center 40a of the start end 40 of the positive electrode 11. Note that each of the first distance d1, the second distance d2, and the third distance d3 is a distance with reference to the longitudinal direction (corresponding to the winding direction) of the positive electrode 11.

### [Evaluation of Amount of Voltage Reduction]

### <Example>

The winding start side of the positive electrode was cut such that the winding-start-side start end of the positive electrode extended along a direction inclined from the positive electrode width direction. Similar to the positive electrode in the embodiment shown in FIG. 2(a), the upper end of the start end was disposed closer to the winding end side than the lower end of the start end. The distance in the winding direction from the upper end of the start end to its lower end was 1 mm. The distance in the winding direction from the width-direction center of the start end to the lower end of the start end was 0.5 mm. The negative electrode was fabricated such that the mixture layer start end on the winding start side was substantially in parallel with the width direction of the negative electrode. The positive electrode and the negative electrode were wound with the separator intervening therebetween, and the electrode assembly was thus fabricated such that the negative electrode mixture layer provided on the winding outer surface of the negative electrode core extended from the winding inner side of the start end of the positive electrode toward the winding start side. The cylindrical battery in Example was fabricated using the electrode assembly.

### <Comparative Example>

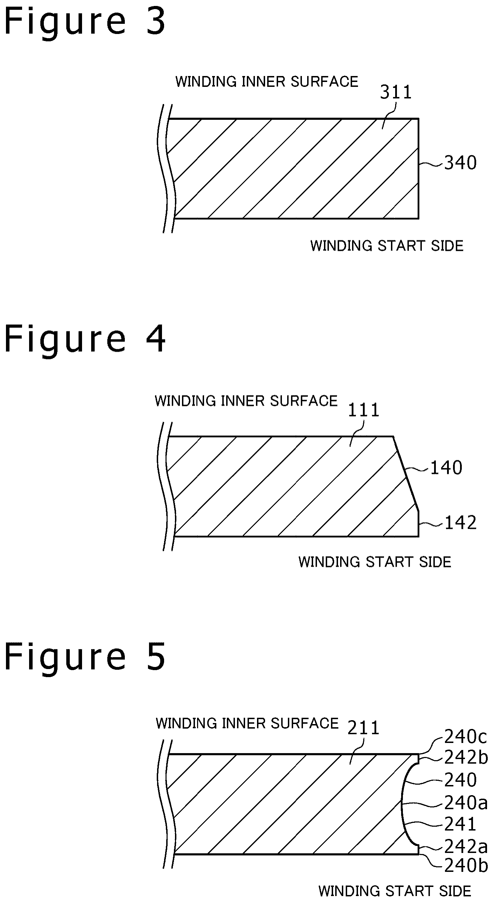

As shown in FIG. 3, the positive electrode was fabricated in a manner similar to that for Example, except that a winding start side of a positive electrode 311 was cut so as to allow the winding-start-side start end 340 of the positive electrode 311 to be substantially in parallel with the width direction of the positive electrode 311. The start end of the positive electrode 311 was disposed at a position corresponding to the position of the width-direction center of the start end of the positive electrode in the electrode assembly in Example, and the positive electrode 311 and the negative electrode were wound with the separator intervening therebetween, thus fabricating the electrode assembly. The cylindrical battery of the comparative example was fabricated using the electrode assembly.

### (Evaluation Method)

Each fabricated battery was charged at a constant current of 1 C until the voltage became 4.2 V. Subsequently, the constant voltage charging was performed at a constant voltage of 4.2 V until the current value became 0.05 C. Subsequently, after the voltage became stable, each battery was left in an environment at 60°C for 150 days. Based on the voltages of each battery measured before and after it was left, the amount of voltage reduction after it was left was evaluated. Table 1 shows an evaluation result.

**[Table 1]**

| | Amount of voltage reduction (mV) |
|---|---|
| Comparative example | 100 |
| Example | 10 |

The battery in Example with the distance between the width-direction center position of the positive electrode start end and the mixture layer start end of the negative electrode mixture layer longer than the distance between the lower end of the positive electrode start end and the mixture layer start end of the negative electrode mixture layer had an amount of voltage reduction significantly reduced to 1/10 in comparison with the battery in the comparative example with the constant distance between the positive electrode start end and the mixture layer start end of the negative electrode mixture layer irrespective of the width-direction position of the positive electrode start end.

As for the cause of the battery in Example with the reduced amount of voltage reduction in comparison with the battery in the comparative example, it is inferred that since the distance between the width-direction center of the positive electrode start end and the mixture layer start end of the negative electrode in the battery in Example was longer than the distance between the lower end of the positive electrode start end and the mixture layer start end of the negative electrode, the width-direction center portion at the positive electrode start end was less likely to press the separator in comparison with the battery in the comparative example.

If the distance in the positive electrode width direction between the width-direction center of the positive electrode start end and the lower end of the positive electrode start end was longer than or equal to 0.5 mm, the voltage reduction was allowed to be significantly prevented. If the distance in the positive electrode width direction between the width-direction center of the positive electrode start end and the lower end of the positive electrode start end was less than or equal to 5 mm, the lower end of the start end of the positive electrode did not excessively protrude on the winding start side. Consequently, the positive electrode, the negative electrode, and the separator were smoothly wound.

As shown in FIG. 2(b), in the case where the negative electrode lead 21a joined to the bottom portion 31 of the exterior can 16 was joined to the winding-start-side end portion of the negative electrode 12, the lower end side of the winding start side of the electrode assembly 14 was resistant to being deformed. Preferably, at the start end 40 of the positive electrode 11, the distal end portion 42 is disposed at the lower end 42b of the start end 40 in this case accordingly.

### [Modified Examples]

Note that the present disclosure is not limited to the aforementioned embodiment and its modified examples, and various improvements and changes can be made in a range of the items described in the claims of the present application and their equivalent range. For example, as shown in FIG. 4, i.e., a schematic plan view of a positive electrode 111 in a first modified example corresponding to FIG. 2(a), a winding-start-side distal end portion 142 at a start end 140 of the positive electrode 111 may extend substantially in parallel with the width direction of the positive electrode 111. According to a second modified example, the distal end portion 142 of the positive electrode 111 can be prevented from being bent when the positive electrode 111, the negative electrode 12, and the separator 13 are wound.

As shown in FIG. 5, i.e., a schematic plan view of a positive electrode 211 in the second modified example corresponding to FIG. 2(a), a start end 240 of the positive electrode 211 may include a convex curved portion 241 on the winding end side in the longitudinal direction at a center portion in the width direction. The first distance between a center 240a of the start end 240 and the mixture layer start end 50 of the negative electrode mixture layer 12b may be longer than the second distance between the lower end (width-direction one end) 240b of the start end 240 in the width direction, and longer than the third distance between the upper end (the other end of in the width direction) 240c of the start end 240 in the width direction and the mixture layer start end 50.

According to the second modified example, the start end shape of the positive electrode 211 was brought substantially into a symmetrical shape with respect to a plane (not shown) bisecting the positive electrode 211 in the width direction. Consequently, the positive electrode 211, the negative electrode 12, and the separator 13 were allowed to be smoothly wound. Distal end portions 242a and 242b respectively positioned at the lower end 240b and the upper end 240c of the start end 240 of the positive electrode 211 extended substantially in the width direction of the positive electrode 211. Consequently, the positive electrode 211, the negative electrode 12, and the separator 13 were allowed to be more smoothly wound.

### REFERENCE SIGNS LIST

10 Cylindrical battery, 11, 111, 211 Positive electrode, 11a Positive electrode core, 11b Positive electrode mixture layer, 12 Negative electrode, 12a Negative electrode core, 12b Negative electrode mixture layer, 13 Separator, 14 Electrode assembly, 14a Hollow portion, 15 Insulating tape, 16 Exterior can, 17 Sealing assembly, 18 Upper insulating plate, 19 Lower insulating plate, 20 Positive electrode lead, 21a First negative electrode lead, 21b Second negative electrode lead, 22 Grooved portion, 23 Terminal plate, 24 Lower vent member, 25 Insulating plate, 26 Upper vent member, 27 Sealing plate, 27a Projection, 27b Vent hole, 28 Gasket, 29 Shoulder portion, 31 Bottom portion, 33 Peripheral edge portion, 38 Extending portion, 39 Cylindrical portion, 40, 140, 240 Positive electrode start end, 40a, 240a Width-direction center of start end, 40b, 240b Lower end of start end, 40c, 240c Upper end of start end, 50 Mixture layer start end of negative electrode, 141 Curved portion, 42, 142, 242a, 242b Distal end portion of start end, d1 First distance, d2 Second distance, d3 Third distance.

## Claims

1. A cylindrical battery, comprising:
an electrode assembly that includes: an elongated positive electrode that includes a positive electrode core and a positive electrode mixture layer; and an elongated negative electrode that includes a negative electrode core and a negative electrode mixture layer, the electrodes being wound with a separator intervening therebetween;
a bottomed cylindrical exterior can that accommodates the electrode assembly; and
a sealing assembly that blocks an opening portion of the exterior can, wherein
the negative electrode mixture layer includes an extending portion that extends from a winding inner side of a start end of the positive electrode on a winding start side to the winding start side, and
a first distance between a width-direction center at the start end and a mixture layer start end of the negative electrode mixture layer on the winding start side is longer than at least one of a second distance between a width-direction one end at the start end and the mixture layer start end, and a third distance between a width-direction another end at the start end and the mixture layer start end.

2. The cylindrical battery according to claim 1, wherein
the width-direction one end is an end on a bottom portion side of the exterior can at the start end,
the first distance is longer than the second distance, and
the cylindrical battery further comprises a negative electrode lead joined to an end portion of the negative electrode on the winding start side.

3. The cylindrical battery according to claim 1 or 2, wherein the first distance is longer than both the second distance and the third distance.

4. The cylindrical battery according to claim 1 or 2, wherein a distal end portion that is positioned closest to the winding start side with respect to the start end extends along a width direction of the positive electrode.
